# EUROPÄISCHE PATENTANMELDUNG

(11) **EP 2 497 963 A1**
(43) Veröffentlichungstag der Anmeldung: **12.09.2012**
(21) Anmeldenummer: 11157662.5
(22) Anmeldetag: 10.03.2011
(51) Int. Cl.: F16B 35/00, F16B 35/04, F16B 39/01

(54) **Schraube oder Bolzen aus zwei verschiedenen Materialien**

(71) Anmelder: Siemens Aktiengesellschaft, 80333 München (DE)
(72) Erfinder: Hoffacker, Ralf, 47800, Krefeld (DE); Kostenko, Yevgen, 40878, Ratingen (DE); Schwass, Gerhard, 45478, Mülheim an der Ruhr (DE); Seybold, Ralph, 45468, Mülheim (DE); Staubach, Reiner, 45133, Essen (DE); Zimmermann, Adam, 45476, Mülheim a.d. Ruhr (DE)

(57) **Zusammenfassung**

Die Erfindung betrifft eine Schraube (1) oder einen Bolzen (1) aus zwei verschiedenen Materialien, wobei die Schraube (1) oder der Bolzen (1) ein um eine Ausdehnungsachse (5) bestehendes inneres Material (9) und ein um das innere Material (9) angeordnetes äußeres Material (7) umfasst.

## Beschreibung

Die Erfindung betrifft eine Schraube oder einen Bolzen aus zwei verschiedenen Materialien.

Um lösbare und dauerhaft formschlüssige Verbindungen und Anbindungen ermöglichen zu können, sind Schrauben dafür geeignet, da sie als ideale Verbindungsmittel und Befestigungsmittel gelten. Das Verbindungsprinzip der Schraube beruht auf zwei Grundzügen, wobei bei der einen Möglichkeit die zu verbindenden Bauteile oder Elemente der Schraubverbindung über einen entweder direkten oder über Muttern indirekten Formschluss zumindest mit dem Schaft der Schraube, meist sogar unmittelbar miteinander verbunden und fixiert werden.

Im Strömungsmaschinenbau, wie z. B. beim Dampfturbinenbau, werden unterschiedliche rotationssymmetrische Komponenten mit Hilfe von Schrauben verbunden. Nachteilig ist hierbei jedoch, dass unabhängig von der Anwendung häufig Leckagen oder Vorspannungsverluste auftreten, die aufgrund der Relaxation bzw. der Ermüdung der Schraubenverbindung hervorgerufen sind. Es werden teilweise sehr große Schrauben eingesetzt, da die Beanspruchung teilweise sehr hoch ist. Darüber hinaus führen die hohen Beanspruchungen zu vergleichsweise dicken Flanschen. Da dicke Flansche eine aufwändige Herstellung erfordern, ist dies ein großer Nachteil. Neben der aufwändigen Herstellung muss viel Bauraum berücksichtigt werden und außerdem führen zu dicke Flansche zu ungewollten Gehäuseverformungen. All diesen Problemen wird derzeit mit massiven Schrauben begegnet.

Wünschenswert wäre eine geeignet Schraube, mit der ein Flansch verkleinert ausgeführt werden kann.

An dieser Stelle setzt die Erfindung an, deren Aufgabe es ist, eine Schraube vorzuschlagen, die bei den im Strömungsmaschinenbau auftretenden Bedingungen verkleinert ausgeführt werden kann. Das bedeutet, dass eine Reduzierung der erforderlichen Schraubengröße als Aufgabe der Erfindung betrachtet wird.

Gelöst wird diese Aufgabe durch eine Schraube oder einen Bolzen aus zwei verschiedenen Materialien, wobei die Schraube oder der Bolzen eine äußere Kontur aus einem äußeren Material und einen Kern aus einem inneren Material umfasst. Darüber hinaus sind die Materialeigenschaften des äußeren Materials und des inneren Materials derart gewählt, dass physikalische und chemische Eigenschaften der Schraube oder des Bolzens bei den im Strömungsmaschinenbau, wie beim Dampfturbinenbau, auftretenden Temperaturen ideale Bedingungen entstehen. So besteht ein erfindungsgemäßer Gedanke darin, in einem relevanten Temperaturbereich ein Material für den Kern auszusuchen, der sich durch eine Volumenkontraktion auszeichnet. Diese Volumenkontraktion wird auch als negatives Kriechen bezeichnet.

Vorteilhafte Weiterbildungen sind in den Unteransprüchen angegeben.

So wird in einer ersten vorteilhaften Weiterbildung die Schraube oder der Bolzen entlang einer Ausdehnungsachse ausgebildet und das innere Material um die Ausdehnungsachse angeordnet, wobei das äußere Material ebenfalls um die Ausdehnungsachse und um das innere Material angeordnet ist.

Schrauben oder Bolzen werden in der Regel in ihrer Ausdehnungsachse thermisch als auch mechanisch belastet. Das innere Material ist dabei in der Regel rotationssymmetrisch um die Ausdehnungsachse angeordnet, wobei das äußere Material ebenfalls in der Regel rotationssymmetrisch um das innere Material ausgebildet ist. Dadurch wird eine hohe Symmetrie erreicht, die bei unterschiedlichen Belastungen zu weniger lokalen Spannungen führt.

In einer weiteren vorteilhaften Weiterbildung weisen die Schraube oder der Bolzen einen Kopf, einen Schaft und einen Fuß auf, wobei der Kopf im Wesentlichen einen größeren Durchmesser als der Schaft aufweist. Erfindungsgemäß wird somit vorgeschlagen, den Anwendungsbereich der möglichen Schrauben oder Bolzen auf nahezu alle möglichen Verbindungsmöglichkeiten auszudehnen.

In einer besonders vorteilhaften Weiterbildung ist das innere Material vom Kopf bis zum Fuß durchgängig ausgebildet. Diese vorteilhafte Weiterbildung bietet im Wesentlichen zwei Vorteile. Zum einen ist eine Herstellung solcher Schrauben oder Bolzen vergleichsweise einfach, da in der Regel lediglich eine Bohrung vom Kopf zum Fuß durchgeführt werden muss und das innere Material vergleichsweise einfach im Inneren der Schraube oder des Bolzens ausgefüllt werden kann. Des Weiteren führt eine durchgängige Ausführung des Kerns zu einer besseren Wärmeleitfähigkeit der Schraube oder des Bolzens, was dazu führt, dass solch eine Schraube oder ein Bolzen verkleinert ausgeführt werden kann.

In einer weiteren vorteilhaften Weiterbildung wird das innere Material lediglich im Schaft und im Fuß angeordnet. Gegenüber der durchgängigen Ausführung des Kerns in der Schraube oder des Bolzen wird jetzt nunmehr vorgeschlagen, das innere Material nicht durchgängig durch die gesamte Schraube oder den gesamten Bolzen auszuführen. Es wird vorgeschlagen, lediglich ein Teil des Bolzens oder der Schraube mit dem inneren Material auszuführen. Im Wesentlichen werden hierbei Materialkosten eingespart.

In einer vorteilhaften Weiterbildung weist das innere Material eine Form auf, die konusartig ausgebildet ist. Im einfachsten Fall kann das innere Material zylinderförmig ausgeführt werden. Die vorteilhaften thermischen und mechanischen Eigenschaften des inneren Materials können somit anwendungsspezifisch dort vergrößert werden, wo es erforderlich sein kann. In manchen Anwendungsfällen ist der Fuß besonders thermisch und mechanisch belastet. Daher wird in einer weiteren vorteilhaften Weiterbildung vorgeschlagen, den Durchmesser der konusartigen Form zum Fuß hin derart auszubilden, dass der Durchmesser zum Fuß hin zunimmt. Somit können besonders im Fuß die besonderen vorteilhaften thermischen und mechanischen Eigenschaften des inneren Materials ausgenutzt werden. In einer besonders vorteilhaften Weiterbildung besteht der Kern aus einer Nickel-Basis-Legierung. Nickel-Basis-Legierungen zeichnen sich im relevanten Temperaturbereich von weniger als 580°C durch eine Volumenkontraktion bzw. negatives Kriechen aus.

In weiteren vorteilhaften Weiterbildungen wird die äußere Schraubenkontur, d. h. das äußere Material aus einem Standardschraubenwerkstoff, wie z. B. 1 Gew.-% oder 10 Gew.-% Cr-Stahl ausgebildet. Dies führt zu einem Stützeffekt für die äußere Schraubenkontur aus 1 Gew.-% oder 10 Gew.-% Cr-Stahl und besseren Auslegungswerten.

Im Folgenden wird eine bevorzugte Ausführungsform der erfindungsgemäßen Schraube anhand der beigefügten schematischen Zeichnungen näher erläutert.

Es zeigen:
- Figur 1: eine erste Ausführungsform einer erfindungsgemäßen Schraube oder eines Bolzens,
- Figur 2: eine zweite Ausführungsform einer erfindungsgemäßen Schraube oder eines Bolzens,
- Figur 3: eine dritte Ausführungsform einer erfindungsgemäßen Schraube oder eines Bolzens.

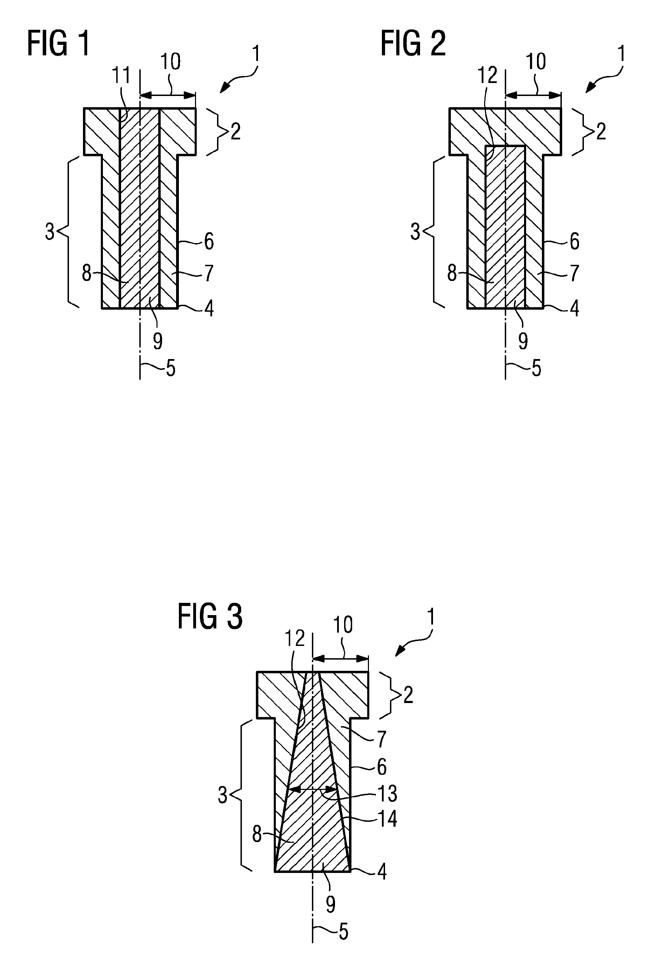

Die Figur 1 zeigt eine erste Ausführungsform einer erfindungsgemäßen Schraube 1 oder eines Bolzens 1. Die Schraube 1 oder der Bolzen 1 umfasst im Wesentlichen einen Kopf 2, einen Schaft 3 und einen Fuß 4. Der Schaft 3 ist in dem Falle, indem das Bauteil als Schraube 1 ausgeführt wird, mit einem in der Figur 1 nicht dargestellten Gewinde ausgeführt, das mit einem in einem anderen Bauteil ausgeführten Gegengewinde oder mit einer Mutter kraftschlüssig verbunden ist. Die Schraube 1 oder der Bolzen 1 ist entlang einer Ausdehnungsachse 5 länglich ausgebildet. Dabei ist die Schraube 1 oder der Bolzen 1 im Wesentlichen rotationssymmetrisch um diese Ausdehnungsachse 5 ausgebildet. Die Schraube 1 oder der Bolzen 1 ist aus zwei verschiedenen Materialien ausgebildet, wobei die Schraube 1 oder der Bolzen 1 eine äußere Kontur 6 aus einem äußeren Material 7 und einen Kern 8 aus einem inneren Material 9 umfasst.

Das innere Material 9 ist hierbei im Wesentlichen rotationssymmetrisch um die Ausdehnungsachse 5 angeordnet. Um das innere Material 9 ist ebenfalls um die Ausdehnungsachse 5 im Wesentlichen rotationssymmetrisch das äußere Material 7 angeordnet.

Der Kopf 2 weist in der Ausführungsform gemäß Figur 1 einen im Wesentlichen größeren Durchmesser 10 auf als der Durchmesser des Schaftes 3.

Gemäß Ausführungsform nach Figur 1 ist der Kern 8 bzw. das innere Material 9 vom Kopf 2 bis zum Fuß 4 durchgängig ausgebildet. Das bedeutet, dass im Wesentlichen eine Bohrung 11 vom Kopf 2 bis zum Fuß 4 ein Einfügen des inneren Materials 9 von Kopf 2 bis Fuß 4 ermöglicht.

In der Figur 2 ist eine zweite Ausführungsform der erfindungsgemäßen Schraube 1 oder Bolzen 1 zu sehen. Der Unterschied ist hierbei, dass der Kern 8 bzw. das innere Material 9 nicht durchgängig vom Kopf 2 bis Fuß 4 ausgebildet ist, sondern lediglich im Schaft 3 im Fuß 4 angeordnet ist. Das bedeutet, dass das innere Material 9 nicht im Kopf 2 angeordnet ist. Im Wesentlichen kann solch eine Schraube 1 oder ein Bolzen 1 durch eine Bohrung 12 ausgeführt werden, die vom Fuß 4 bis zum Kopf 2 ausgebildet ist.

In der Figur 3 ist eine dritte Ausführungsform der erfindungsgemäßen Schraube 1 oder Bolzen 1 zu sehen. Der Unterschied hierbei ist, dass das innere Material 9 bzw. der Kern 8 nicht, wie in den Figuren 1 und 2 zu sehen, zylinderförmig ausgebildet ist, sondern eine Form aufweist, die konusartig ist. Das bedeutet, dass der Durchmesser 13 der konusartigen Form 14 vom Kopf 2 bis zum Fuß 4 hin zunimmt.

In allen drei Ausführungsformen gemäß Figur 1, 2 und 3 wird das innere Material 9 aus einer Nickel-Basis-Legierung ausgebildet, das sich im relevanten Temperaturbereich von weniger als 580°C durch eine Volumenkontraktion auszeichnet. Die äußere Kontur 6 bzw. das äußere Material 7 wird aus einem Schraubenwerkstoff, wie z. B. aus einem 1 Gew.-% oder 10 Gew.-% Cr-Stahl ausgebildet.

Die Schraube 1 oder der Bolzen 1 findet Anwendung im gesamten Strömungsmaschinenbau, wie z. B. im Dampfturbinen- oder Gasturbinenbau.

## Patentansprüche

1. Schraube (1) oder Bolzen (1) aus zwei verschiedenen Materialien,
**dadurch gekennzeichnet, dass**
die Schraube (1) oder der Bolzen (1) eine äußere Kontur (6) aus einem äußeren Material (7) und einen Kern (8) aus einem inneren Material (9) umfasst.

2. Schraube (1) oder Bolzen (1) nach Anspruch 1,
wobei die Schraube (1) oder der Bolzen (1) entlang einer Ausdehnungsachse (5) ausgebildet ist und das innere Material (9) um die Ausdehnungsachse (5) angeordnet ist,
wobei das äußere Material (7) ebenfalls um die Ausdehnungsachse (5) und um das innere Material (9) angeordnet ist.

3. Schraube (1) oder Bolzen (1) nach Anspruch 1 oder 2,
wobei die Schraube (1) oder der Bolzen (1) einen Kopf (2), einen Schaft (3) und einen Fuß (4) aufweisen,
wobei der Kopf (2) im Wesentlichen einen größeren Durchmesser (10) als der Schaft (3) aufweist.

4. Schraube (1) oder Bolzen (1) nach einem der vorhergehenden Ansprüche,
wobei das innere Material (9) vom Kopf (2) bis zum Fuß (4) durchgängig ausgebildet ist.

5. Schraube (1) oder Bolzen (1) nach Anspruch 3,
wobei das innere Material (9) lediglich im Schaft (3) und im Fuß (4) angeordnet ist.

6. Schraube (1) oder Bolzen (1) nach einem der vorhergehenden Ansprüche,
wobei das innere Material (9) eine Form aufweist, die konusartig ausgebildet ist.

7. Schraube (1) oder Bolzen (1) nach Anspruch 6,
wobei der Durchmesser (13) der konusartigen Form zum Fuß (4) hin zunimmt.

8. Schraube (1) oder Bolzen (1) nach einem der vorhergehenden Ansprüche,
wobei das innere Material (9) aus einer Nickel-Basis-Legierung besteht.

9. Schraube (1) oder Bolzen (1) nach einem der vorhergehenden Ansprüche,
wobei das äußere Material (7) aus einem 1 Gew.-% Cr-Stahl besteht.

10. Schraube (1) oder Bolzen (1) nach einem der Ansprüche 1 bis 8,
wobei das äußere Material (7) aus einem 10 Gew.-% Cr-Stahl besteht.
